# EUROPEAN PATENT SPECIFICATION

(11) **EP 2 327 953 B1**
(45) Date of publication and mention of the grant of the patent: **19.06.2013**
(21) Application number: 09176626.1
(22) Date of filing: 20.11.2009
(51) Int. Cl.: G01B 9/02, G01B 9/04, G01B 11/24, G02B 27/28

(54) **Apparatus and method for determining a height map of a surface through both interferometric and non interferometric measurements.**
Vorrichtung und Methode zur Bestimmung des Höhenprofils einer Oberfläche anhand interferometrischer und nicht-interferometrischer Messungen.
Appareil et méthode pour déterminer le profil de hauteurs d'une surface via des mesures interférométriques et non interférométriques

(43) Date of publication of application: 01.06.2011
(73) Proprietor: Mitutoyo Corporation, Kawasaki-shi, Kanagawa 213-0012 (JP)
(72) Inventor: Jansen, Maarten Jozef, 5529 BB Casteren (NL)
(74) Representative: Eveleens Maarse, Pieter

(56) References cited:
- WO-A2-2008/067528
- DE-A1- 3 108 389
- JP-A- 2007 225 341
- US-A1- 2007 165 241

## Description

The invention concerns an apparatus for determining a height map of a surface. Such apparatuses are known, for instance as a so called profilometer adapted to work in the interferometric mode, and which is adapted to determine the height map of an object. These profilometers are best suited for measuring tasks where an extreme high height resolution is required independent of the magnification of the microscope objective. However, in interferometric mode the profiler may be limited to measuring relatively smooth surfaces when used with low magnification objectives.

However to the prior art also belong profilometers working in the non-interferometric mode. These profilometers comprise a microscope, which can be used as an optical sectioning microscope in the embodiment of a confocal microscope or as an optical sectioning microscope in the embodiment of a structured light illumination microscope (SIM). Confocal or structured illumination microscopes (SIM) are better suited for measuring the height profile of structured surfaces in the low magnification range and generally provide better results when measuring steep slopes. Typically non-interferometric optical sectioning microscopes provide faster measurements for a low magnification range at the cost of reduced height resolution.

Both types of measuring profilometers comprise a number of common components, like lenses. Especially, but not exclusively in the case of lenses this concerns expensive components. In non-interferometric mode, the interferometer may also be used as traditional imaging microscope.

Hence US-A-2007/0165241 discloses a profilometer which is adapted to be used on both the interferometric and the non interferometric mode, to allow use of expensive components for both types of measurements. More in particular this document discloses an apparatus for determining a height map of a surface, the apparatus comprising positioning means for positioning an object having the surface to be measured, a light source, an optical detector adapted to convert the received light into electrical signals, first optical means for directing light from the light source to the surface and for directing the light reflected by the surface to the optical detector, a beam splitter located between the first optical means and the surface, a reference mirror, second optical means located between the beam splitter and the mirror for directing the light from the beam splitter to the mirror and from the mirror to the beam splitter, scanning means for amending at least the distance between the sample and the focal plane of the objective, adapted to control the scanning means to perform a scanning action and to receive the signals from the optical detector, wherein the processing unit is adapted to convert the signals received from the optical detector into a height map.

In this prior art document two types of objectives are used, that is one adapted for use in interferometric measurements and one adapted to be used in non interferometric measurements. Please note that the objectives are not the only lenses used in these kind of apparatus; there are lenses present in the first optical means.

Consequently this prior art apparatus discloses an apparatus that requires two objectives leading to high investment and a substantial volume required for the apparatus. Further the fact that this prior art apparatus comprises at least two objectives, that is at least one for the interferometric measurements and at least one for non-interferometric measurements, entails the need for a mechanism to exchange these objectives, which is provided by a turntable, as is per se common in microscopes. This itself is a complex construction, taking into account the required accuracy of positioning of these objectives, which is needed due to the fields of extreme accuracy obtainable by the apparatuses according to the invention. It is noted that the use as a non-interferometric measurement apparatus requires the use of pattern means located between the light source and the first optical means for applying a pattern to the light emitted by the light source. However for use as a viewing microscope these pattern means are not needed.

In view of the above the present invention aims to provide a microscope of the kind referred to above wherein the problems of the prior art microscope, as discussed above are avoided.

Hence the present invention provides an apparatus for determining a height map of a surface and being adapted to be used in an interferometric mode and in a non interferometricic mode, the apparatus comprising positioning means for positioning an object having the surface to be measured, a light source, an optical detector adapted to convert received light into electrical signals, first optical means for directing light from the light source to the surface and for directing the light reflected by the surface to the optical detector, a polarizing beam splitter located between the first optical means and the surface and being adapted to split light beams with a polarisation angle with two components into a light beam with a polarisation angle with a first component and a light beam with a polarisation angle with a second component, orthogonal to the first component, a reference mirror, second optical means located between the polarizing beam splitter and the mirror for directing the light from the beam splitter to the mirror and from the mirror to the beam splitter, a microscope objective located between the polarizing beam splitter and the surface, scanning means for amending at least the distance between the surface and the focal plane of the microscope objective, a processing unit adapted to control the scanning means to perform a scanning action and to receive the signals from the optical detector, wherein the processing unit is adapted to convert the signal received from the optical detector into a height map in the interferometric mode and to convert the pattern signal received from the optical detector into a height map in the non-interferometric mode, a controllable polarisation controller located between the light source and the first optical means, adapted to be switched on by the processing means in the interferomtric mode and to be switched off in the non-interferometric mode, and an analysing polarizer located between the first optical means and the optical detector and being adapted to fold the polarisations of the measurement beam and the reference beam to the same polarisation axis in the interferometric mode, characterized in that the processing means are adapted to switch on the polarization of the polarisation controller in the interferometric mode and to switch off the polarisation of the polarisation controller in the non interferometric mode and that the light source is adapted to generate a patterned light beam, of which the pattern is adapted to be used in profilometry.

The present invention makes use of the properties of polarized light to allow the inclusion of optical components into optical paths or to exclude components from the optical paths by components working as switches under the control of the polarisation angle of the light. The polarization controller allows to control the polarisation angle of the light emitted by the light source, so that polarized light having a first polarisation angle passes through a polarising beam splitter and the branch of the light path containing the reference mirror is not used. The light passing the polarising beam splitter travels over the main optical path so that this light is used in the non interferometric mode of the apparatus. When light having a polarisation angle with two components is fed through the polarisation controller, light having a polarisation component with the first angle is directed to the main optical path only, while the light with the polarisation component orthogonal thereto travels over the branched optical path, including the reference mirror, thus obtaining the structure of an interferometer.

Summarizing the use of polarised light allows to `switch' between the structure of the interferometric and the non interferometric structure of the profilometer. However to obtain a proper interference pattern to develop on the detector, an analysing polariser has been located between the first optical means and the optical detector. When the apparatus works in the interference mode light beams with two different polarisations reach the analysing polarizer. The analysing polariser folds the polarisations of both the measuring beam and the reference beam to the same polarisation axis.

US-A-5 122 648 also describes a profilometer adapted to be used both in the interferometric mode and in the non interferometric mode. The profilometer described in this document comprises a small reference mirror located concentrically in the objective, but which mirror is covered by a screen inserted into the objective in the non interferometric mode. The mechanically covering of such a mirror is a mechanical cumbersome solution.

According to a preferred embodiment the polarisation controller comprises a polariser wherein control of the polarisation angle of the emitted light is performed by rotation of the polariser. This embodiment provides a simple, easily controllable configuration for the controllable polariser and it is preferably used together with a light source adapted to generate non polarized light.

If the light source is adapted to generate polarized light, then the polarisation controller preferably comprises a rotatable half waveplate, wherein control of the polarisation angle of the emitted light is performed by rotation of the half wave plate. This embodiment provides a simple, easily controllable configuration for the controllable polariser.

Preferably the polarisation controller of the kind referred to above comprises a clean-up polariser, rotatable around its optical axis, and of which the angle of rotation is half of that of the half waveplate. The polarizer here is intended to improve the polarisation contrast ratio. The cleanup polarizer is especially important in non-interferometric mode where a high polarization contrast ratio is desired such that no light is directed to the reference arm of the interferometer.

Yet an excluding embodiment provides a light source adapted to generate polarised light and a polarisation controller comprising a liquid crystal polarisator wherein control of the polarisation angle of the emitted light is performed by control of the liquid crystal polarisator. The principle of the easily available liquid crystal display makes use of controllable polarising properties of the transparent wall, between which the actual liquid crystal is present, allowing an easy adaptation as a polarisation controller. In an LCoS display this transparent wall is glued to a reflective backplane. Then the optical element as a whole is used as a reflective element. The liquid crystal polarization controller may also be an array of liquid crystal polarization controllers, being part of a liquid crystal display. It is however also possible to use illuminating LED arrays, transmissive LCDs, LCoS microdisplays (NLCoS, FLCoS, LCPG SLM), DMD microdisplay projection engines, fixed pattern displays or mirror scanning laser stripe projection systems.

According to another preferred embodiment the liquid crystal polarisator is separated in an array of cells. This allows interference contrast to be controlled. Another effect of this feature is that it allows the liquid crystal polarisator to be used as a pattern generator in the SIM-configuration.

Preferably the polarisation controller is adapted to continuously control the polarisation angle of the emitted light. This allows the ratio between the light directed to the reference arm and the measurement arm to be controlled to compensate for the reflection properties of the sample. Besides this method allows for optimization of the interference contrast by fine tuning the split-ratio of the beam splitter in the interference objective. Our method allows fine tuning by carefully choosing a input polarization angle such that the power of the received light by the detector is equally balanced between the reference light and the sample light.

The use of the apparatus as a viewing microscope does not require the presence of a pattern generator. The use as a non-interferometric profilometer requires the presence of such a filter, a preferred embodiment provides pattern means located between the light source and the first optical means for applying a pattern to the light emitted by the light source.

The use of the apparatus as a non interferometric profilometer requires a pattern generator to be able to recognize patterns on the optical detector. As this pattern generator would disturb the measurements in the interferometric mode and its use as a 'normal imaging microscope', this pattern generator is preferably switchable between an active state and an inactive state. Note that the active state includes all polarization settings except the one where no light is directed towards the reference mirror of the polarized interference objective.

According to another preferred embodiment, the apparatus is adapted to be used as a viewing microscope.

Another preferred embodiment provides the feature that the reference arm of the interferometer extend orthogonal to the measuring arm of the interferometer and that the polarizing beam splitter comprises a semi transparent polarisation sensitive mirror located under an angle of 45° relative to the optical axis. Hence an interferometer of the Michelson configuration is obtained.

Another preferred embodiment provides the feature that the reference arm and the measuring arm of the interferometer are coaxial and that the polarizing beam splitter comprises a polarizing beam splitter with a wide angle acceptance range around normal incidence, like a beam splitter of the wire grid type, located with its main plane perpendicular to the optical axis. Hence an interferometer of the Mirau configuration is obtained.

Yet another preferred embodiment provides a kit of parts to convert a interferometric profilometer into an apparatus according to the invention wherein the interferometric profilometer comprising a beam splitter, a light source, an optical detector, first optical means for directing light from the light source to the surface and for directing the light reflected by the surface of the optical detector, a beam splitter, a reference mirror, second optical means located between the polarizing beam splitter and the mirror for detecting the light from the beam splitter to the mirror and from the mirror to the beam splitter, a microscope objective located between the beam splitter and the surface, scanning means for amending at least the distance between the surface and the focal plane of the microscope objective, wherein the kit comprises: a polarizing beam splitter, dimensioned to replace the beam splitter present in the interferometric profilometer; a controllable polarisation controller, adapted to be provided between the light source and the first optical means of said interferometric profilometer, an analysing polariser adapted to be located between the first optical means and the optical detector and processing means adapted to control the polarisation controller and adapted and adapted to control the scanning means for perform a scanning action and to receive the signals from the optical detector, wherein the processing means are adapted to convert the signal received from the optical detector into a height map in an interferometric mode and to convert the pattern signal received from the detector in a non-interferometic mode, wherein the processing means are adapted to switch on the polarisation controller in the interferometric mode and to switch off the polarisation of the polarisation controller in the non interferometric mode and that the light source is adapted to generate a patterned light beam, of which the pattern is adapted to be used in profilometry. This kit of parts allows the user of an interferometric profilometer to convert this apparatus to a profilometer which can be used in two modes, just as described above. This is an attractive way of obtaining a multi use profilometer with a small investment.

Finally a preferred method for determining a height map of a surface with a profilometer of the kind referred to above comprises the steps of determining the height map of said surface through a first method of an interferometric method and a non interferometric method, converting the apparatus from a first state adapted to execute the first method to a second state adapted to execute the second method of the interferometric method and the non interferometric method, and determining the height map of said surface through the second method, wherein the converting of the apparatus comprises amending the polarisation angle of the light used in the profilometer.

Subsequently the present invention will be elucidated with the help of the drawings wherein:
Figure 1: is a diagram showing the components of a profilometer according to the invention;
Figure 2: is a diagram showing the components of a controllable polariser;
Figure 3A: is a diagram showing a profilometer according to a first embodiment in a non interferometric mode;
Figure 3B: is a diagram showing the profilometer according to the first embodiment in an interferometric mode and having the configuration of a Michelson type interferometer;
Figure 4A: is a diagram showing a profilometer according to a second embodiment in a non interferometric mode;
Figure 4B: is a diagram showing the profilometer according to the second embodiment in an interferometric mode and having the configuration of a Mirau type interferometer; and
Figure 5: is a diagram showing a third embodiment having the configuration of the Michelson configuration

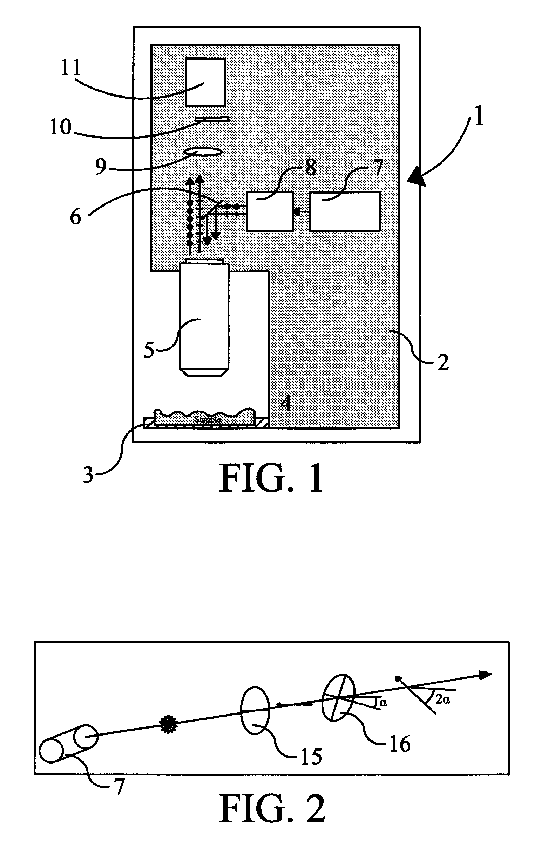

The profilometer 1 depicted in figure 1 comprises a frame 2 to which most components are attached. The profilometer 1 comprises a clamp 4 or similar means for locating a sample or object 3 of which the height (z-axis) as a function of the position in the surface perpendicular thereto (x- and y-axes) is to measured. Expressed otherwise, the apparatus 1 is adapted to determine the height map of the sample 3. The profilometer 1 further comprises an objective 5, a beam splitting mirror 6, a light source 7 and a controllable polariser 8, all connected to the frame 2. Further the profilometer 1 comprises a lens 9, an analysing polariser 10 and a camera or light sensitive element 11. It is noted that the light source 7 may be formed by a conventional light source like a light source adapted to generate white light of a patterned light source adapted to generate a patterned light beam, which is useful in structured interference measurements. Further, although not depicted in figure 1 is a digital computational unit 12 adapted to both control the controllable elements, like the controllable polariser 8, the scanning motion of the objective 5, and the camera 11, and to process the images recorded by the camera 11.

Generally speaking the light emitted by the light source 7 is polarised by the controllable polariser, directed to the beam splitting mirror 6 where it is directed to the objective 5. From the objective 5 the light reaches the sample 3 located in the sample holding means 4, is reflected by the sample 3, travels through the objective 5 in opposite sense and through the beam splitting mirror 6, through the lens 9, the analysing polariser 10 and reaches the camera 11 where the light is converted into an electrical signal. The electrical signal thus provided is fed to the computational unit where it is processed and analysed.

According to the invention the controllable polariser 8 is used to switch the profilometer into the interferometric mode or the non interferometric mode. The controllable polariser denoted in its whole by 8 and being depicted in figure 2, comprises a polarising filter 15 in the classical meaning of the word, a half-waveplate 16, located downstream from the polarising filter 15, and mounted to be rotatable around the optical axis of the polariser 8. This device is adapted to convert non polarised light, generated by the light source 7 into polarised light with a controllable polarisation angle. The light emerging from the polariser 8 is polarised in a single fixed direction, as appears from the drawing. The following wave plate 16 adds an angle to polarization axis of the light, which is equal to the double of the rotation angle of said plate 16. Hence the polarisation angle of the light emerging from the controllable polariser 8 can be controlled by rotation of the waveplate 16. As stated before, it will be clear that other kinds of controllable polarisers may be used.

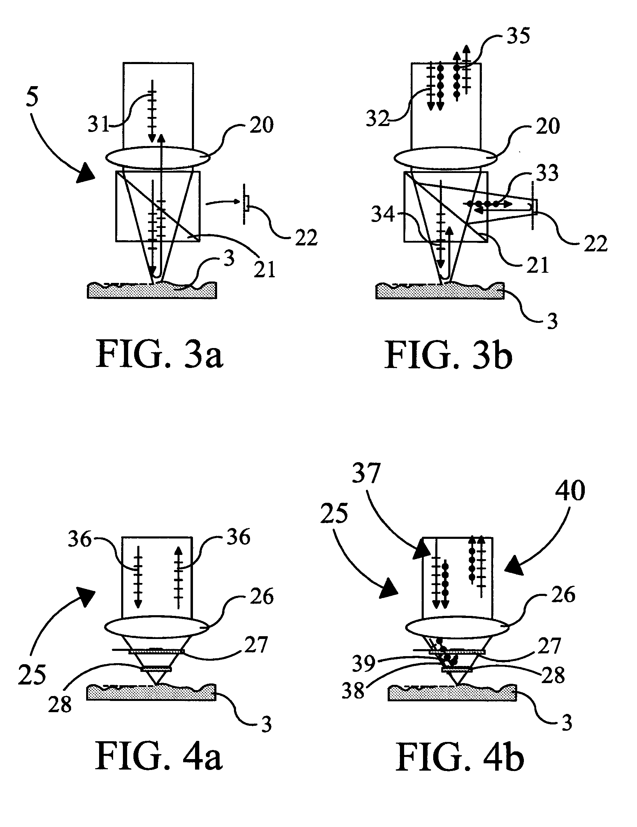

Figure 3A depicts the objective 5 of a first embodiment, which embodiment is used in the non interferometric configuration. The objective comprises a lens 20, which, depending on the design, may be replaced by lenses of other configurations or multiple lenses. Further the objective comprises a polarising beam splitter 21 and a reference mirror 22. The reference mirror 22 is located in the focal plane or close to the focal plane of the objective, just as the sample 3. As this figure shows the configuration wherein the polarisation angle of the light beam 31 hitting the polarising beam splitter 21 makes the polarising beam splitter transparent, the light beam 31 passes the polarising beam splitter 21, and is reflected by the sample 3, and passes the polarising beam splitter 21 again. Measurement of the height of the sample then takes place by a non polarising method, for instance by analysing the stack of vertically scanned images reflected by the sample 3 onto the camera 11. In this configuration the reference mirror 22 is not functioning. For profilometry in non-interferometric mode, prior art methods may be used such as spatial contrast detection profilometry, confocal microscopy, structured illumination optical sectioning microscopy (SIM).

Figure 3B shows the same embodiment, but then operating in the interferometric mode. Herein a light beam 32 is polarised in two directions. This light beam 32 hits the polarising beam splitter 21 and is split into a sample beam 34 directed to the sample 3 and a reference beam 33 directed to the reference mirror 22. This is caused by the fact that the polarisation angle of the light beam 32 hitting the polarising beam splitter 21 comprises components with polarisation in both directions. The resulting reference and sample beams 33, 34 are reflected by the reference mirror 22, the sample 3 respectively and the resulting beams 33, 34 are united in the polarising beam splitter 21 to a combined beam 35 and directed towards the camera 11. At least when used in interference mode, the camera is preceded in the optical path by an analysing polariser 10 as depicted in figure 1, to allow an interference pattern to develop. The processing of the image thrown on the camera 11 is subsequently analysed and processed on a way which is per se known in the prior art. It is noted that the configuration of the interferometer incorporated into the profilometer is that of a Michelson interferometer, caused by the fact that there is a angular separation between the reference arm 33 and the sample arm 34 of the interferometer.

Figure 4A shows the objective 25 of a second embodiment, which is used in a non interferometric configuration. The objective 25 comprises a lens 26, just as in the first embodiment and a polarising beam splitter which is embodied as a wire grid polarising beam splitter 28. This wire grid polarising beam splitter 28 is adapted to split the light hitting it into a reference beam and a sample beam, if light with corresponding polarisation is used. A reference mirror 27 is located in the optical axis of the objective 25. As this figure shows the configuration wherein the polarisation angle of the light beam 36 hitting the polarising beam splitter 28 is identical to the polarization axis for which the polarising beam splitter is transparent. The light beam 36 passes the polarising beam splitter 28, and is reflected by the sample 3, and passes the polarising beam splitter 28 again. Measurement of the height of the sample 3 then takes place by a non interferometric method, for instance by projecting sample images, and analysing a stack of images reflected by the sample 3 onto the camera 11. In this configuration the reference mirror 27 is not functioning.

Figure 4B shows the same embodiment as figure 4A, but in operating in the interferometric mode. Herein the light beam 37 hitting the polarising beam splitter 28 is split into a sample beam 38 directed to the sample 3 and a reference beam 39 directed to the reference mirror 27. This is caused by the fact that the polarisation angle of the light beam 37 hitting the polarising beam splitter 28 comprises components with polarisation in both directions. The resulting reference and sample beams 38, 39 are reflected by the reference mirror 27, the sample 3 respectively and the resulting beams are united in the polarising beam splitter 28 to a beam 40 and directed towards the camera 11. Also in this embodiment the camera is preceded in the optical path by an analysing polarizer 10, depicted in figure 1, to allow an interference pattern to develop. Again the processing of the stack of vertically scanned images thrown on the camera 11 is subsequently analysed and processed on a way which is per se known in the prior art. It is noted that the configuration of the interferometer incorporated into the profilometer is that of a Mirau interferometer.

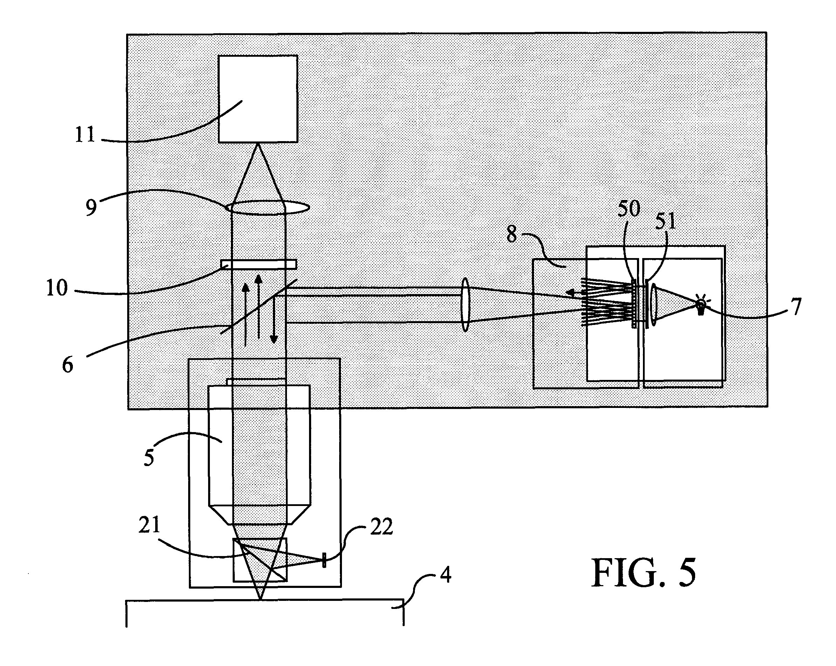

Figure 5 shows a third embodiment with a Michelson configuration wherein the polarisation controller 8 of the light source 7 is provided with a liquid crystal unit 50. This unit allows to control the polarisation angle of the light emerging from the unit. Herein the light source 7 is adapted to generate polarised light as it contains a polarisation filter 51. The liquid crystal unit 50 comprises a substantial number of separate cells, as is per se known in this field. This allows to control the distribution of light over the surface of the sample 4 to correct for local differences in reflection of the sample. When this embodiment is used in the SIM mode, the liquid crystal unit 50 can be used to generate a pattern, to be used in the SIM-process. The other components of this embodiment are similar to those in the preceding embodiments. It will be clear that this embodiment can also be used in the Mirau configuration.

It will be clear that numerous deviations can be made from the embodiments disclosed above within the scope of the invention as disclosed in the accompanying claims.

## Claims

1. Apparatus (1) for determining a height map of a surface and being adapted to be used in an interferometric mode and in a non interferometric mode, the apparatus comprising:
- positioning means (4) for positioning an object (3) having the surface to be measured;
- a light source (7);
- an optical detector (11) adapted to convert received light into electrical signals;
- first optical means (9) for directing light from the light source (7) to the surface and for directing the light reflected by the surface to the optical detector (11);
- a polarizing beam splitter (21,28) located between the first optical means (8,9) and the surface and being adapted to split light beams with a polarisation angle with two components into a light beam with a polarisation angle with a first component and a light beam with a polarisation angle with a second component, orthogonal to the first component;
- a reference mirror (22);
- second optical means located between the polarizing beam splitter (21,28) and the mirror (22) for directing the light from the beam splitter (21,28) to the mirror (22) and from the mirror (22) to the beam splitter (21,28);
- a microscope objective (5) located between the polarizing beam splitter (21,28) and the surface;
- scanning means for amending at least the distance between the surface and the focal plane of the microscope objective (5);
- a processing unit (12), adapted to control the scanning means to perform a scanning action and to receive the signals from the optical detector (11), wherein the processing unit (12) is adapted to convert the signal received from the optical detector (11) into a height map in the interferometric mode and to convert the pattern signal received from the optical detector into a height map in the non interferometric mode;
- a controllable polarisation controller (8) located between the light source (7) and the first optical means (9), adapted to be switched on by the processing means (12) in the interferometric mode and to be switched off in the non-interferometric mode; and
- an analysing polarizer (10) located between the first optical means (9) and the optical detector (11), and being adapted to fold the polarisations of the measurement beam and the reference beam to the same polarisation axis in the interferometric mode,
**characterized in that** the processing means (12) are adapted to switch on the polarization of the polarisation controller in the interferometric mode and to switch off the polarisation of the polarisation controller in the non interferometric mode and
that the light source (7) is adapted to generate a patterned light beam, of which the pattern is adapted to be used in profilometry.

2. Apparatus (1) as claimed in claim 1, **characterized in that** the light source (7) is adapted to generate polarised light and that the polarisation controller comprises a polarizer (8) rotatable around its optical axis and that control of the polarisation angle of the emitted light is performed by rotation of the polarizer (8).

3. Apparatus (1) as claimed in claim 1, **characterized in that** the polarisation controller (8) comprises a polarizer (15) and a rotatable half wave plate (16), and that control of the polarisation angle of the emitted light is performed by rotation of the half wave plate (16).

4. Apparatus (1) as claimed in claim 3, **characterized in that** the polarisation controller (8) comprises a polarizer (15), rotatable around its optical axis, and of which the angle of rotation is half of that of the half waveplate (16).

5. Apparatus (1) as claimed in claim 1, **characterized in that** the light source (7) is adapted to generate polarised light and that the polarisation controller (8) comprises a liquid crystal polarisator and that control of the polarisation angle of the emitted light is performed by control of the liquid crystal polarisator.

6. Apparatus (1) as claimed in claim 5, **characterized in that** the liquid crystal polarisator is separated in an array of cells.

7. Apparatus (1) as claimed in any of the preceding claims, **characterized in that** the polarisation controller (8) is adapted to continuously control the polarisation angle of the emitted light.

8. Apparatus (1) as claimed in one of the preceding claims, **characterized by** pattern means located between the light source (7) and the first optical means for applying a pattern to the light emitted by the light source.

9. Apparatus (1) as claimed in claim 8, **characterized in that** the pattern means are switchable between an active state and an inactive state.

10. Apparatus (1) as claimed in any of the preceding claims, **characterized in that** the apparatus (1) is adapted to be used as a viewing microscope.

11. Apparatus (1) as claimed in one of the preceding claims, **characterized in that** the reference arm of the interferometer extends orthogonal to the measuring arm of the interferometer and that the polarizing beam splitter comprises a semi transparent polarisation sensitive mirror (21) located under an angle of 45° relative to the optical axis.

12. Apparatus (1) as claimed in one of the claims 1-10, **characterized in that** the reference arm and the measuring arm of the interferometer are coaxial and that the polarizing beam splitter comprises a polarizing beam splitter (28) of the wire grid type located with its main plane perpendicular to the optical axis.

13. Kit of parts to convert a interferometric profilometer into an apparatus (1) as claimed in any of the preceding claims, the interferometric profilometer comprising a beam splitter, a light source (7), an optical detector (11), first optical means (9) for directing light from the light source to the surface and for directing the light reflected by the surface of the optical detector (11), a beam splitter, a reference mirror, second optical means located between the polarizing beam splitter and the mirror for detecting the light from the beam splitter to the mirror and from the mirror to the beam splitter, a microscope objective (5) located between the beam splitter and the surface, scanning means for amending at least the distance between the surface and the focal plane of the microscope objective,
the kit comprising:
- a polarizing beam splitter (21, 28), dimensioned to replace the beam splitter present in the interferometric profilometer;
- a controllable polarisation controller (8), adapted to be provided between the light source (7) and the first optical means of said interferometric profilometer;
- an analysing polarizer (10) adapted to be located between the first optical means (9) and the optical detector (11); and
- processing means (12) adapted to control the polarisation controller and adapted to control the scanning means for perform a scanning action and to receive the signals from the optical detector, wherein the processing means (12) are adapted to convert the signal received from the optical detector into a height map in an interferometric mode and to convert the pattern signal received from the detector in a non-interferometic mode, **characterized in that** the processing means are adapted to switch on the polarisation controller in the interferometric mode and to switch off the polarisation of the polarisation controller in the non interferometric mode and that the light source is adapted to generate a patterned light beam, of which the pattern is adapted to be used in profilometry.

14. Method for determining a height map of a surface with a profilometer as claimed in any of the claims 1-12, the method comprising the following steps:
- determining the height map of said surface through a first method of an interferometric method and a non interferometric method;
- converting the apparatus from a first state adapted to execute the first method to a second state adapted to execute the second method of the interferometric method and the non interferometric method;
- determining the height map of said surface through the second method,
**characterized in that** the converting of the apparatus comprises amending the polarisation angle of the light used in the profilometer.

## Patentansprüche

1. Vorrichtung (1) zur Bestimmung des Höhenprofils einer Oberfläche, ausgelegt für die Anwendung sowohl im interferometrischen als auch im nicht-interferometrischen Modus, wobei die Vorrichtung enthält:
- Positionierungsmittel (4) zum Positionieren eines Objektes (3) mit der zu messenden Oberfläche;
- eine Lichtquelle (7);
- einen optischen Detektor (11), der ausgelegt ist, empfangenes Licht in elektrische Signale umzuwandeln;
- erste optische Mittel (9) um Licht von der Lichtquelle (7) auf die Oberfläche zu lenken und das von der Oberfläche reflektierte Licht zu dem optischen Detektor (11) zu lenken;
- einen polarisierenden Strahlteiler (21,28), der zwischen den ersten optischen Mitteln (8,9) und der Oberfläche angeordnet ist und ausgelegt ist, Lichtstrahlen mit einem Polarisationswinkel mit zwei Komponenten in einen Lichtstrahl mit einem Polarisationswinkel mit einer ersten Komponente und einen Lichtstrahl mit einem Polarisationswinkel mit einer zweiten Komponente orthogonal zu der ersten Komponente zu teilen;
- ein Referenzspiegel (22);
- zweite optische Mittel, die zwischen dem polarisierenden Strahlteiler (21,28) und dem Spiegel (22) angeordnet sind, um das Licht von dem Strahlteiler (21,28) zum Spiegel (22) und vom Spiegel (22) zum Strahlteiler (21,28) zu lenken;
- ein Mikroskopobjektiv (5), das sich zwischen dem polarisierenden Strahlteiler (21,28) und der Oberfläche befindet;
- Scanmittel zur Änderung mindestens des Abstands zwischen der Oberfläche und der Fokalebene des Mikroskopobjektivs (5);
- eine Verarbeitungseinheit (12), die zur Steuerung der Scanmittel bei der Durchführung einer Scanhandlung und zur Signalaufnahme vom optischen Detektor (11) ausgelegt ist, wobei die Verarbeitungseinheit (12) zum Umwandeln des vom optischen Detektor (11) empfangenen Signals in ein Höhenprofil im interferometrischen Modus ausgelegt ist und um das vom optischen Detektor empfangene Signal in ein Höhenprofil im nicht-interferometrischen Modus zu verwandeln;
- eine regelbare Polarisationssteuerung (8), die sich zwischen der Lichtquelle (7) und dem ersten optischen Mittel (9) befindet und ausgelegt ist, durch die Verarbeitungseinheit (12) im interferometrischen Modus eingeschaltet und im nicht-interferometrischen Modus ausgeschaltet zu werden; und
- ein Analyse-Polarisator (10), der sich zwischen den ersten optischen Mitteln (9) und dem optischen Detektor (11) befindet und ausgelegt ist, im interferometrischen Modus die Polarisation des Messstrahls und des Referenzstrahls in dieselbe Polarisationsachse im interferometrischen Modus zu falten,
**dadurch gekennzeichnet, dass** die Verarbeitungseinheit (12) ausgelegt ist, die Polarisation der Polarisationssteuerung im interferometrischen Modus einzuschalten, und die Polarisation im nicht-interferometrischen Modus auszuschalten und dass die Lichtquelle (7) ausgelegt ist, um einen gemusterten Lichtstrahl zu erzeugen, wobei das Muster zur Verwendung in der Profilometrie ausgelegt ist.

2. Vorrichtung (1) nach Anspruch 1, **dadurch gekennzeichnet, dass** die Lichtquelle (7) ausgelegt ist, polarisiertes Licht zu erzeugen und dass die Polarisationssteuerung einen Polarisator (8) enthält, der um seine optische Achse drehbar ist und dass die Steuerung des Polarisationswinkels des emittierten Lichts durch Drehen des Polarisators (8) durchgeführt wird.

3. Vorrichtung (1) nach Anspruch 1, **dadurch gekennzeichnet, dass** die Polarisationssteuerung (8) einen Polarisator (15) und eine drehbare Halbwellenplatte (16) enthält und dass die Steuerung des Polarisationswinkels des emittierten Lichts durch Drehen der Halbwellenplatte (16) durchgeführt wird.

4. Vorrichtung (1) nach Anspruch 3, **dadurch gekennzeichnet, dass** die Polarisationssteuerung (8) einen Polarisator (15) enthält, der um seine optische Achse drehbar ist, und bei dem der Rotationswinkel die Hälfte des Winkels der Halbwellenplatte (16) beträgt.

5. Vorrichtung (1) nach Anspruch 1, **dadurch gekennzeichnet, dass** die Lichtquelle (7) ausgelegt ist, polarisiertes Licht zu erzeugen und dass die Polarisationssteuerung (8) einen Flüssigkristall-Polarisator enthält und dass die Steuerung des Polarisationswinkels des emittierten Lichts durch Steuerung des Flüssigkristall-Polarisators erfolgt.

6. Vorrichtung (1) nach Anspruch 5, **dadurch gekennzeichnet, dass** der Flüssigkristall-Polarisator in ein Feld von Zellen unterteilt ist.

7. Vorrichtung (1) nach einem der vorhergehenden Ansprüche, **dadurch gekennzeichnet, dass** die Polarisationssteuerung (8) ausgelegt ist, ständig den Polarisationswinkel des emittierten Lichts zu kontrollieren.

8. Vorrichtung (1) nach einem der vorhergehenden Ansprüche, **gekennzeichnet durch** Rastermittel, die sich zwischen der Lichtquelle (7) und dem ersten optischen Mittel befinden, um das von der Lichtquelle emittierte Licht mit einem Muster zu versehen.

9. Vorrichtung (1) nach Anspruch 8, **dadurch gekennzeichnet, dass** das Muster zwischen einem aktiven Zustand und einem inaktiven Zustand umschaltbar ist.

10. Vorrichtung (1) nach einem der vorhergehenden Ansprüche, **dadurch gekennzeichnet, dass** die Vorrichtung (1) als Betrachtungsmikroskop verwendet werden kann.

11. Vorrichtung (1) nach einem der vorhergehenden Ansprüche, **dadurch gekennzeichnet, dass** sich der Referenzarm des Interferometers orthogonal zum Messarm des Interferometers erstreckt und dass der polarisierende Strahlteiler einen semitransparenten Polarisations-empfindlichen Spiegel (21) enthält, der unter einem Winkel vom 45° relativ zur optischen Achse angeordnet ist.

12. Teilesatz (1) nach einem der Ansprüche 1-10, **dadurch gekennzeichnet, dass** der Referenzarm und der Messarm des Interferometers koaxial sind und dass der polarisierende Strahlteiler einen polarisierenden Strahlteiler (28) vom Drahtgittertyp umfasst, der mit seiner Hauptebene senkrecht zur optischen Achse liegt.

13. Bausatz zum Umrüsten eines interferometrischen Profilometers in eine Vorrichtung (1) nach einem der vorhergehenden Ansprüche, wobei das interferometrische Profilometer enthält: einen Strahlteiler, eine Lichtquelle (7), einen optischen Detektor (11), erste optische Mittel (9) um Licht von der Lichtquelle zur Oberfläche zu leiten und um das von der Oberfläche des optischen Detektors (11) reflektierte Licht zu leiten, einen Strahlteiler, einen Referenzspiegel, zweite optische Mittel, die sich zwischen dem polarisierenden Strahlteiler und dem Spiegel befinden, zum Erkennen des Lichts vom Strahlteiler zum Spiegel und vom Spiegel zum Strahlteiler, ein Mikroskopobjektiv (5), das sich zwischen dem Strahlteiler und der Oberfläche befindet, Scanmittel zur Verbesserung des Abstands zwischen der Oberfläche und der Fokalebene des Mikroskopobjektivs,
wobei der Bausatz enthält:
- einen polarisierenden Strahlteiler (21,28), der so dimensioniert ist, dass er den im interferometrischen Profilometer anwesenden Strahlteiler ersetzen kann;
- eine regelbare Polarisationssteuerung (8), die ausgelegt ist, um zwischen der Lichtquelle (7) und dem ersten optischen Mittel von besagtem interferometrischen Profilometer bereitgestellt zu werden;
- einen Analyse-Polarisator (10), der ausgelegt ist, zwischen den ersten optischen Mitteln (9) und dem optischen Detektor (11) aufgestellt zu werden; und
- eine Verarbeitungseinheit (12), die ausgelegt ist, die Polarisationssteuerung zu steuern und ausgelegt ist, die Scanmittel zur Durchführung einer Scanhandlung und die Signale vom optischen Detektor zu empfangen, wobei die Verarbeitungseinheit (12) ausgelegt ist, das vom optischen Detektor empfangene Signal in ein Höhenprofil in einen interferometrischen Modus umzuwandeln und das von dem Detektor empfangene Mustersignal in einen nicht-interferometrischen Modus umzuwandeln,
**dadurch gekennzeichnet, dass** die Verarbeitungseinheit ausgelegt ist, die Polarisationssteuerung im interferometrischen Modus einzuschalten und die Polarisation der Polarisationssteuerung im nicht-interferometrischen Modus auszuschalten und dass die Lichtquelle ausgelegt ist, einen gemusterten Lichtstrahl zu erzeugen, wobei das Muster sich eignet, in der Profilometrie verwendet zu werden.

14. Verfahren zur Bestimmung des Höhenprofils einer Oberfläche anhand eines Profilometers nach einem der Ansprüche 1-12, wobei das Verfahren die folgenden Schritte enthält:
- Bestimmung des Höhenprofils von besagter Oberfläche anhand eines ersten Verfahrens nach einem interferometrischen Verfahren sowie einem nicht-interferometrischen Verfahren;
- Umrüsten der Vorrichtung aus einem ersten Status, der ausgelegt ist, das erste Verfahren auszuführen, in einen zweiten Status, der ausgelegt ist, das zweite Verfahren sowohl des interferometrischen Verfahrens als auch des nicht-interferometrischen Verfahrens auszuführen;
- Bestimmung des Höhenprofils von besagter Oberfläche anhand des zweiten Verfahrens, **dadurch gekennzeichnet, dass** die Umwandlung der Vorrichtung eine Änderung des Polarisationswinkels des in dem Profilometer verwendeten Lichts enthält.

## Revendications

1. Dispositif (1) pour établir une carte topographique d'une surface et adapté à une utilisation en mode interférométrique et en mode non interférométrique, le dispositif comprenant :
- des moyens de positionnement (4) pour positionner un objet (3) comportant la surface à mesurer ;
- une source de lumière (7) ;
- un détecteur optique (11) adapté pour convertir la lumière reçue en signaux électriques ;
- un premier moyen optique (9) pour diriger la lumière de la source de lumière (7) jusqu'à la surface et pour diriger la lumière réfléchie par la surface jusqu'au détecteur optique (11) ;
- un diviseur de faisceau polarisant (21, 28) situé entre le premier moyen optique (8, 9) et la surface, et adapté pour diviser des faisceaux de lumière présentant un angle de polarisation ayant deux composantes en un faisceau de lumière présentant un angle de polarisation ayant une première composante et en un faisceau de lumière présentant un angle de polarisation ayant une seconde composante, perpendiculaire à la première composante ;
- un miroir de référence (22) ;
- un second moyen optique situé entre le diviseur de faisceau polarisant (21, 28) et le miroir (22) pour diriger la lumière du diviseur de faisceau (21, 28) jusqu'au miroir (22) et du miroir (22) jusqu'au diviseur de faisceau (21, 28) ;
- un objectif de microscope (5) situé entre le diviseur de faisceau polarisant (21, 28) et la surface ;
- un moyen de balayage pour modifier au moins la distance entre la surface et le plan focal de l'objectif de microscope (5) ;
- une unité de traitement (12), adaptée pour commander le moyen de balayage pour qu'il exécute une opération de balayage, et pour recevoir les signaux du détecteur optique (11), l'unité de traitement (12) étant adaptée pour convertir le signal reçu du détecteur optique (11) en une carte topographique en mode interférométrique et pour convertir le signal configurationnel reçu du détecteur optique en une carte topographique en mode non interférométrique ;
- un régulateur de polarisation régulable (8) situé entre la source de lumière (7) et le premier moyen optique (9), adapté pour être activé par le moyen de traitement (12) en mode interférométrique et pour être désactivé en mode non interférométrique, et
- un polariseur analyseur (10) situé entre le premier moyen optique (9) et le détecteur optique (11), et adapté pour replier les polarisations du faisceau de mesure et du faisceau de référence sur le même axe de polarisation en mode interférométrique,
**caractérisé en ce que** le moyen de traitement (12) est adapté pour activer la polarisation du régulateur de polarisation en mode interférométrique et pour désactiver la polarisation du régulateur de polarisation en mode non interférométrique, et **en ce que** la source de lumière (7) est adaptée pour produire un faisceau de lumière configuré dont la configuration est adaptée à une utilisation en profilométrie.

2. Dispositif (1) selon la revendication 1, **caractérisé en ce que** la source de lumière (7) est adaptée pour produire une lumière polarisée et **en ce que** le régulateur de polarisation comprend un polariseur (8) rotatif autour de son axe optique et **en ce que** la régulation de l'angle de polarisation de la lumière émise est exécutée par rotation du polariseur (8).

3. Dispositif (1) selon la revendication 1, **caractérisé en ce que** le régulateur de polarisation (8) comprend un polariseur (15) et une plaque demi-onde rotative (16), et **en ce que** la régulation de l'angle de polarisation de la lumière émise est exécutée par rotation de la plaque demi-onde (16).

4. Dispositif (1) selon la revendication 3, **caractérisé en ce que** le régulateur de polarisation (8) comprend un polariseur (15), rotatif autour de son axe optique, et dont l'angle de rotation est la moitié de celui de la plaque demi-onde rotative (16).

5. Dispositif (1) selon la revendication 1, **caractérisé en ce que** la source de lumière (7) est adaptée pour produire une lumière polarisée et **en ce que** le régulateur de polarisation (8) comprend un polariseur à cristaux liquides et **en ce que** la régulation de l'angle de polarisation de la lumière émise est exécutée par régulation du polariseur à cristaux liquides.

6. Dispositif (1) selon la revendication 5, **caractérisé en ce que** le polariseur à cristaux liquides est divisé en une matrice de cellules.

7. Dispositif (1) selon l'une quelconque des revendications précédentes, **caractérisé en ce que** le régulateur de polarisation (8) est adapté pour réguler en continu l'angle de polarisation de la lumière émise.

8. Dispositif (1) selon l'une quelconque des revendications précédentes, **caractérisé par** un moyen de configuration situé entre la source de lumière (7) et le premier moyen optique pour appliquer une configuration à la lumière émise par la source de lumière.

9. Dispositif (1) selon la revendication 8, **caractérisé en ce que** le moyen de configuration est basculable entre un état actif et un état inactif.

10. Dispositif (1) selon l'une quelconque des revendications précédentes, **caractérisé en ce que** l'appareil (1) est adapté pour être utilisé comme microscope de visualisation.

11. Dispositif (1) selon l'une quelconque des revendications précédentes, **caractérisé en ce que** le bras de référence de l'interféromètre s'étend à la perpendiculaire du bras de mesure de l'interféromètre et **en ce que** le diviseur de faisceau polarisant comprend un miroir semi-transparent (21) sensible à la polarisation situé sous un angle de 45° par rapport à l'axe optique.

12. Dispositif (1) selon l'une quelconque des revendications 1-10, **caractérisé en ce que** le bras de référence et le bras de mesure de l'interféromètre sont coaxiaux et **en ce que** le diviseur de faisceau polarisant consiste en un diviseur de faisceau polarisant (28) du type à grille de fils situé de sorte que son plan principal soit perpendiculaire à l'axe optique.

13. Ensemble de pièces pour convertir un profilomètre interférométrique en un appareil (1) selon l'une quelconque des revendications précédentes, le profilomètre interférométrique comprenant un diviseur de faisceau, une source de lumière (7), un détecteur optique (11), un premier moyen optique (9) pour diriger la lumière de la source de lumière jusqu'à la surface et pour diriger la lumière réfléchie par la surface du détecteur optique (11), un diviseur de faisceau, un miroir de référence, un second moyen optique situé entre le diviseur de faisceau polarisant et le miroir pour détecter la lumière allant du diviseur de faisceau au miroir et du miroir au diviseur de faisceau, un objectif de microscope (5) situé entre le diviseur de faisceau et la surface, un moyen de balayage pour modifier au moins la distance entre la surface et le plan focal de l'objectif de microscope,
l'ensemble comprenant :
- un diviseur de faisceau polarisant (21, 28), dimensionné pour remplacer le diviseur de faisceau présent dans le profilomètre interférométrique ;
- un régulateur de polarisation régulable (8), adapté pour être disposé entre la source de lumière (7) et le premier moyen optique dudit profilomètre interférométrique ;
- un polariseur analyseur (10) adapté pour être disposé entre le premier moyen optique (9) et le détecteur optique (11), et
- un moyen de traitement (12) adapté pour commander le régulateur de polarisation et adapté pour commander le moyen de balayage pour qu'il exécute une opération de balayage, et pour recevoir les signaux du détecteur optique, le moyen de traitement (12) étant adapté pour convertir le signal reçu du détecteur optique en une carte topographique en mode interférométrique et pour convertir le signal configurationnel reçu du détecteur en mode non interférométrique, **caractérisé en ce que** le moyen de traitement est adapté pour activer le régulateur de polarisation en mode interférométrique et pour désactiver la polarisation du régulateur de polarisation en mode non interférométrique, et **en ce que** la source de lumière est adaptée pour produire un faisceau de lumière configuré dont la configuration est adaptée à une utilisation en profilométrie.

14. Procédé pour établir une carte topographique d'une surface avec un profilomètre selon l'une quelconque des revendications 1-12, le procédé comprenant les étapes suivantes ;
- établissement de la carte topographique de ladite surface au moyen d'un premier procédé parmi un procédé interférométrique et un procédé non interférométrique ;
- transformation de l'appareil pour le faire passer d'un premier état adapté à l'exécution du premier procédé à un second état adapté à l'exécution du second procédé parmi le procédé interférométrique et le procédé non interférométrique ;
- établissement de la carte topographique de ladite surface au moyen du second procédé,
**caractérisé en ce que** la transformation de l'appareil consiste à modifier l'angle de polarisation de la lumière utilisée dans le profilomètre.
